# EUROPÄISCHE PATENTSCHRIFT

(11) **EP 0 923 298 B1**
(45) Veröffentlichungstag und Bekanntmachung des Hinweises auf die Patenterteilung: **07.03.2001**
(21) Anmeldenummer: 97936692.9
(22) Anmeldetag: 08.08.1997
(51) Int. Cl.: A22C 13/00

(54) **VERFAHREN ZUM BESCHICHTEN VON DAUERWÜRSTEN UND HARTKÄSEN**
METHOD OF COATING LONG-KEEPING SAUSAGES AND HARD CHEESES
PROCEDE POUR RECOUVRIR DES SAUCISSES LONGUE CONSERVATION ET DES FROMAGES A PATE DURE

(30) Priorität: 09.08.1996 DE 19632171
(43) Veröffentlichungstag der Anmeldung: 23.06.1999
(73) Patentinhaber: Stemmler, Heinz, Jr., D-50668 Köln (DE); Stemmler, Andreas, 50668 Köln (DE)
(72) Erfinder: Stemmler, Heinz, Jr., D-50668 Köln (DE); Stemmler, Andreas, 50668 Köln (DE)
(74) Vertreter: Weber, Thomas, Dr. Dipl.-Chem.
(86) Internationale Anmeldenummer: EP9704315
(87) Internationale Veröffentlichungsnummer: WO9806271

(56) Entgegenhaltungen:
- EP-A- 0 336 796
- DE-A- 1 417 507
- FR-A- 867 351
- FR-A- 2 355 954
- US-A- 2 285 009

## Beschreibung

Die Erfindung betrifft ein Verfahren zum Beschichten von Lebensmitteln, die ausgewählt sind aus Dauerwürsten, die eine Natur- oder Kunstdarmumhüllung aufweisen und Hartkäsen mit einer Schellack/ Polyamid-Zusammensetzung umfassend in wässrig-ethanolischer Lösung, Schellack und Polyamid sowie die durch das erfindungsgemäße Verfahren erhältlichen, mit der Schellack/Polyamid-Zusammensetzung beschichteten Lebensmittel.

Handelsübliche Dauerwürste (=Rohwürste) weisen trotz der Natur- oder Kunstdarmumhüllung den Nachteil auf, daß es bedingt durch den Fleischsaftverlust durch die Umhüllung hindurch zu einem meßbaren Gewichtsverlust kommt. Damit verbunden zeichnen sich diese Wurstwaren durch eine fettige Oberfläche aus. Darüber hinaus kommt es, bedingt durch die derzeit übliche, in dieser Hinsicht unzureichende Umhüllung, zu einem uneinheitlichen Farbbild im Querschnitt der eingeschlossenen Wurstwaren vom Inneren der Wurst zum äußeren Rand hin, was insbesondere beim Anschneiden der Würste in Form von einer mehr oder weniger breiten Randbildung an der Grenze zur Umhüllung hin deutlich sichtbar ist. Diese Randbildung, oftmals ohne weiteres erkennbar bei der Salami, verstärkt sich oft noch nach dem Anschnitt.

Hartkäse wird zur Haltbarmachung üblicherweise mit einer Paraffinwachsschicht umhüllt. Diese wird jedoch nach einiger Zeit spröde und brüchig, wodurch der damit erzielbare Zweck der Haltbarmachung des darin eingeschlossenen Hartkäses nicht mehr erfüllt wird. Ferner tritt trotz der Umhüllung oftmals eine Randbildung bei den eingeschlossenen Käsen auf.

Es war dementsprechend eine Aufgabe der vorliegenden Erfindung, ein Verfahren zum Beschichten der Oberflächen von Dauerwürsten sowie Hartkäse mit einer Beschichtungszusammensetzung zur Verfügung zu stellen, die auf diesen Lebensmitteln eine gleichmäßige, glatte, transparente und ausreichend elastische Beschichtung ergibt, die das Auftreten der oben beschriebenen Nachteile verhindert. Ferner sollte die Beschichtung auf der Oberfläche der genannten Lebensmittel gut haften.

Das Verfahren soll einfach und wirtschaftlich sein und es ermöglichen, die oben genannten Lebensmittel vollständig und dauerhaft mit dieser Beschichtung zu versehen.

Es wurde nunmehr gefunden, daß diese Aufgabe gelöst wird durch eine Zusammensetzung umfassend in wässrig-ethanolischer Lösung
(a) 1-99 Gew.-% Schellack und
(b) 99-1 Gew.-% wenigstens eines in wässrigem Ethanol löslichen Polyamids,
jeweils bezogen auf die Gesamtmenge von (a) und (b).

Im einzelnen betrifft die Erfindung ein Verfahren zum Beschichten von Lebensmitteln, die ausgewählt sind aus Dauerwürsten, die eine Natur- oder Kunstdarmumhüllung aufweisen und Hartkäsen mit einem dauerhaften, gleichmäßigen Überzug aus einer Zusammensetzung umfassend
(a) 1-99 Gew.-% Schellack und
(b) 99-1 Gew.-% Polyamid
durch Behandlung der Oberfläche der Würste oder der Käse mit einer Zusammensetzung umfassend in wässrig-ethanolischer Lösung
(a) 1-99 Gew.-% Schellack und
(b) 99-1 Gew.-% wenigstens eines in wässrigem Ethanol löslichen Polyamids,
jeweils bezogen auf die Gesamtmenge von (a) und (b).

Die Zusammensetzung kann zum Beschichten von Dauerwürsten, die eine Natur- oder Kunstdarmumhüllung aufweisen und Hartkäsen verwendet werden, wodurch Dauerwürste erhalten werden, die auf der Natur- oder Kunstdarmumhüllung eine gleichmäßige, glatte, transparente und elastische dauerhafte Beschichtung, umfassend den Schellack und das Polyamid aufweisen und die fest auf dem Natur- oder Kunstdarmüberzug haftet. Gleiches gilt für die Beschichtung von Hartkäse, wobei hier die Beschichtung direkt auf der vorher unbeschichteten Hartkäseoberfläche aufgetragen wird.

In einer bevorzugten Ausgestaltung betrifft die Erfindung die vollständige Beschichtung, also ein Auftragen der Beschichtung über die gesamte äußere Oberfläche der genannten Dauerwürste und Hartkäse.

Bei den beschichtbaren Dauerwürsten (=Rohwürste) handelt es sich um alle Arten von weichen bis harten Rohwürsten (Hartwürste), insbesondere die Rügenwalder Teewurst (weiche Rohwurst), Salami oder Kochsalami (harte Rohwürste).

Als Hartkäsesorten können alle als solche bekannten Käsesorten eingesetzt werden.

Bei dem erfindungsgemäß einzusetzenden Schellack kann grundsätzlich jeder handelsübliche Schellack verwendet werden. Bevorzugt ist jedoch entwachster und mit Aktivkohle entfärbter Schellack. Schellack ist in Alkohol, insbesondere Ethanol oder wässrigem Ethanol sehr gut löslich. Als im Rahmen der Erfindung einsetzbare Schellacke sind insbesondere solche zu nennen, die entwachst sind und die einen Schmelzpunktbereich von 65-85 °C, eine Verseifungszahl von 180-240 und einen Wachsgehalt von bis zu 0,5 Gew.-%, vorzugsweise maximal 0,2 Gew.-% aufweisen.

Bei den in wässrigem Ethanol löslichen Polyamiden handelt es sich um synthetische, lineare Polyamide, die seit langem bekannt und im Handel erhältlich sind. Diese Polyamide sind in Alkoholen, z.B. Ethanol, insbesondere Ethanol-Wassergemischen (z.B. Ethanol : Wasser = 80 : 20 Gewichtsteile) gut löslich, d.h. zum Teil in Mengen von bis zu 50 Gew.-%. Unter "ethanol-löslich" oder "in wässrigem Ethanol löslich" werden solche Polyamide verstanden, die bei der Siedetemperatur (1013 mbar, Normaldruck) des Ethanols bzw. eines Ethanol/ Wasser-Gemisches zu wenigstens 5 Gew.-% löslich sind.

Im einzelnen handelt es sich bei den in wässrigem Ethanol löslichen Polyamiden um Polymere, die gebildet sind aus
(a)
   (i) wenigstens einem C₂-C₁₈, vorzugsweise C₄-C₁₂ aliphatischen, C₄-C₁₈ cycloaliphatischen, C₆-C₁₈ aromatischen oder alkylaromatischen Di-, Tri-, Tetra- oder Pentaamin, welches jeweils an wenigstens einem Stickstoffatom mit einer geradkettigen, verzweigten, cyclischen oder cycloaliphatischen Alkylgruppe mit bis zu 8 Kohlenstoffatomen oder einer C₁-C₆ Alkylenoxy-C₁-C₆-alkyl-Gruppe substituiert sein kann,
   (ii) wenigstens einer gesättigten aliphatischen C₄-C₁₂ oder aromatischen C₈-C₂₀ Dicarbonsäure oder C₂₈-C₄₄ Dimerfettsäure und gegebenenfalls
   (iii) wenigstens einer geradkettigen, gesättigten Aminocarbonsäure, vorzugsweise ω-Aminocarbonsäure, enthaltend 4 bis 20 Kohlenstoffatome, wobei die Aminogruppe mit einen Substituent, wie unter (a) erwähnt, substituiert sein kann, oder
(b) der unter (a) (iii) definierten Aminocarbonsäure alleine,
oder jeweils deren zur Amidbildung geeigneten Derivate.

Als deren zur Amidbildung geeigneten Derivate sind insbesondere die Ester, Nitrile, Anhydride, Lactame, Salze und Addukte (z.B. Diamin/Disäureaddukt) der oben genannten Verbindungen zu verstehen, soweit sie existieren.

Typische Vertreter des Diamins sind Ethylendiamin, Tetra-, Penta-, Hexa-, Octa-, oder Decamethylendiamin, 1,2-, 1,3-, oder 1,4-Xylylendiamin.

Typische Vertreter der Dicarbonsäure sind Bernsteinsäure, Glutarsäure, Adipinsäure, Pimelinsäure, Korksäure, Azealinsäure, Sebacinsäure, Nonan-, Decan-, Undecan- und Dodecandicarbonsäure zu nennen. Jedoch sind auch ohne weiteres Cyclohexan-, 1,2-, 1,3- oder 1,4-Diessigsäure, Isophthalsäure oder Terephthalsäure zu nennen.

Typische Vertreter der Aminocarbonsäuren sind die ω-Aminocarbonsäuren, insbesondere 6-Aminocapronsäure, 7-Aminoheptansäure, 12-Aminostearinsäure oder 4-Aminocyclohexancarbonsäure.

Die primären Aminogruppen der oben genannten Verbindungen können jeweils einfach substituiert sein mit Alkyl- oder Cycloalkylgruppen, die vorzugsweise nicht mehr als 6 Kohlenstoffatome enthalten. In Frage kommen im einzelnen die Methyl-, Ethyl-, Propyl-, Isopropyl-, Butyl-, tert.-Butyl-, Amyl- oder Cyclohexylgruppen.

Bei den Dimerfettsäuren handelt es sich insbesondere um solche, die erhältlich sind durch Dimerisierung aus Sojaöl, Leinsamenöl und anderen Fettsäuren, die aus ihren Glyceriden erhältlich sind.

Vorzugsweise beträgt das molare Verhältnis von Diamin (i) zu Dicarbonsäure (ii) 1 : 1 und das molare Verhältnis zwischen Diamin und der ω-Aminocarbonsäure (wenn vorhanden) zwischen 4:1 und 1:20 betragen kann.

Alle die oben genannten Polyamid-Typen von in wässrigem Ethanol löslichen Polyamiden, ihre Eigenschaften und Verfahren zu ihrer Herstellung sind aus der Literatur bekannt. Im einzelnen wird jedoch auf die US-2,285,009, US-2,320,088, US-2,388,035, US-2,393,972 und die US-2,450,940 verwiesen, auf deren Offenbarung hiermit ausdrücklich Bezug genommen wird. Besonders bevorzugte Polyamide sind die unter der Bezeichnung Elvamide® (Handelsprodukte der Firma Du Pont) erhältlichen Polyamide, insbesondere das Elvamide® 8063.

Bevorzugt umfaßt die erfindungsgemäße Zusammensetzung 99 bis 10 Gew.-% Schellack (a) und 1 bis 90 Gew.-% des in wässrigem Ethanol löslichen Polyamids (b), besonders bevorzugt 98,5 bis 70 Gew.-% Schellack (a) und 30 bis 1,5 Gew.-% des in wässrigem Ethanol löslichen Polyamids (b), jeweils bezogen auf die Gesamtmenge Schellack und Polyamid [(a)+(b)].

Die Konzentration (a+b) von Schellack (a) und Polyamid (b) in der erfindungsgemäßen wässrig-ethanolischen Lösung beträgt, je nach Löslichkeit und Anteil der Komponenten und unter Berücksichtigung der gewünschten Viskosität der Lösung, zwischen 1 und 60 Gew.-%, vorzugsweise 10 bis 50 Gew.-%, besonders bevorzugt 20-40 Gew.-%. Für Beschichtungen geringerer Schichtdicke auf den Dauerwürsten sind geringere Konzentrationen, für die Beschichtungen der Hartkäse können höhere Konzentrationen eingesetzt werden, um größere Schichtdicken bei der Beschichtung zu erzielen. Hierbei können die Konzentrationen an Polyamid und Schellack in der Lösung bis zu 60 Gew.-% betragen.

Das wässrig-ethanolische Lösungsmittel, in welchem gemäß der Erfindung der Schellack und das Polyamid gelöst sind, enthält wenigstens 50 Gew.-%, vorzugsweise wenigstens 70 Gew.-% und besonders bevorzugt 75 bis 98 Gew.-% Ethanol. Die Konzentration des Ethanols wird jedoch im wesentlichen von den jeweiligen Löslichkeitsverhältnissen des Polyamids abhängen und kann vom Fachmann entsprechend den Erfordernissen eingestellt werden.

Eine besonders bevorzugte Zusammensetzung erhält man durch Mischen einer 40-60 Gew.-%igen, insbesondere 45-55 Gew.-%igen ethanolischen Schellack-Lösung (über 99 Gew.-% Ethanol) mit einer 10-20 Gew.-%igen, insbesondere 12-18 Gew.-%igen wässrig-ethanolischen Lösung (Ethanol:Wasser etwa 75:25 Gew.-Teile) von Polyamid, insbesondere Elvamide® 8063 im GewichtsVerhältnis 1:20 bis 20:1, vorzugsweise 1:10 bis 10:1, besonders bevorzugt 1:1.

Die erfindungsgemäße Zusammensetzung kann ferner bis zu 20 Gew.-%, insbesondere bis zu 15 Gew.-%, bezogen auf die wässrig-ethanolische Lösung Farbstoffe und/oder Pigmente, beispielsweise Titandioxid oder Eisenoxid oder insbesondere für Hartkäse die Pigmente gelb und rot enthalten.

Die erfindungsgemäße Zusammensetzung kann durch Lösen der Einzelkomponenten in wässrigem Ethanol oder durch Mischen der jeweiligen Lösungen (ethanolisch oder wässrig-ethanolisch) der Einzelkomponenten erfolgen. Es kann durchaus erforderlich sein, daß die wässrig-ethanolische Lösung zum vollständigen Lösen der Einzelkomponenten, vorzugsweise unter Rühren, erwärmt werden muß. Gegebenenfalls kann auch die erwärmte Lösung zur Beschichtung der Lebensmittel einzusetzen sein.

Gemäß dem erfindungsgemäßen Verfahren zum Beschichten der Dauerwürste, die eine Natur- oder Kunstdarmumhüllung aufweisen und den Hartkäsen, werden diese Lebensmittel mit der erfindungsgemäßen wässrig-ethanolischen Lösung an der Oberfläche behandelt. Diese Behandlung kann dadurch erfolgen, daß die Würste oder die Käse mit der erfindungsgemäßen, gegebenenfalls erwärmten, wässrigen ethanolischen Lösung besprüht, bestrichen oder die Würste bzw. die Käse darin eingetaucht wird.

Nach dieser Behandlung läßt man die behandelten Würste bzw. Käse an der Luft trocknen, wodurch auf der Natur- oder Kunstdarmumhüllung der Dauerwürste bzw. auf dem Hartkäse eine Schellack und Polyamid enthaltende Schicht zurückbleibt, die in ihrer Schellack/Polyamid-Zusammensetzung der Schellack/ Polyamidzusammensetzung der jeweiligen eingesetzten wässrig-ethanolischen Lösung entspricht.

Nach dem Bestreichen, Besprühen oder Eintauchen der Ware kann man die überschüssige Lösung auch abtropfen lassen und die behandelte Ware durch eine geeignete Trocknungsvorrichtung führen, in der das Lösungsmittel im Luftstrom bei 10 bis 50 °C, in Abhängigkeit von der Ware, verdunstet.

Bei dem auf der Ware zurückbleibenden Überzug handelt es sich um einen gleichmäßigen, festhaftenden, mechanisch stabilen und transparenten Film, der auch dazu geeignet ist, besonders problematische, glatte Oberflächen, wie beispielsweise die der Rügenwalder Teewurst, festhaftend, nachhaltend glatt und transparent zu umspannen.

Die nach dem erfindungsgemäßen Verfahren erhältlichen Dauerwürste sowie Hartkäse können Schutzfilme aufweisen, mit einer Schichtdicke von bis zu 1 mm. Bei den Wurstwaren sind jedoch Schichtdicken von bis zu 0,5 mm, vorzugsweise bis zu 0,2 mm und besonders bevorzugt bis zu 0,1 mm angebracht, wohingegen Hartkäse an deren Oberfläche mit einem Polyamid/ Schellack-Überzug versehen werden können, dessen Schichtdicke bis zu 0,7, vorzugsweise bis zu 0,5 und besonders bevorzugt bis zu 0,4 mm beträgt. Die minimale Schichtdicke beträgt jeweils 0,001 mm, vorzugsweise 0,005 mm, besonders bevorzugt 0,01 mm.

Die genannten Schichtdicken können durch Einstellung entsprechender Polyamid/Schellackkonzentrationen der wässrig-ethanolischen Lösung und damit der Viskosität der Lösung erzielt werden. Dies ist jedoch im Einzelfall zu entscheiden und im wesentlichen von der zu beschichtenden Ware abhängig.

Die Kombination von Schellack mit Polyamid zur Beschichtung der oben genannten Lebensmittel hat gegenüber der Beschichtung der Lebensmittel mit Filmen aus der jeweiligen Polyamidlösung alleine den Vorteil, daß der erfindungsgemäße Film "hauteng" auf der Natur- oder Kunstdarmumhüllung der Wurstoberfläche anliegt, wodurch eine Kontamination der Wurstoberfläche im Zwischenraum zwischen der Wurstoberfläche und dem Polyamidfilm vermieden wird. Insbesondere unter warmen Temperaturbedingungen kann es zu erheblichen Qualitätsveränderungen der nur mit dem Polyamidfilm zusätzlich beschichteten Lebensmittel kommen. Durch das nicht hautenge Anhaften des Polyamidfilms alleine können Fleischsaftanreicherungen zwischen Wurstumhüllung und Polyamidfilm auftreten.

Mit einer Schellackbeschichtung alleine ist die ungleichmäßige Veränderung der Farbe der eingeschlossenen Würste und Käse (Randbildung) nicht zu vermeiden.

Die erfindungsgemäß beschichteten Wurst- und Käsewaren sind wesentlich länger haltbar und weisen auch nach längerer Lagerung keine Randbildung bei der eingeschlossenen Wurst bzw. dem Käse auf. Die Beschichtung haftet gut auf der Wurst-bzw. der Käseoberfläche.

Die Erfindung wird durch die nachfolgenden Beispiele anhand der Beschichtung einer harten Rohwurst (Salami) beschrieben. Die erhaltenen Ergebnisse hinsichtlich des Gewichtsverlustes über einen gewissenen Zeitraum sowie Randbildung und Geschmack treten in gleichem Umfang bzw. in gleicher Qualität auch bei der Beschichtung von anderen Dauerwürsten und Hartkäsen mit der erfindungsgemäßen Zusammensetzung auf. Daher ist die Erfindung nicht auf dieses konkrete Beispiel beschränkt.

### Beispiele

Zur Durchführung der nachfolgend beschriebenen Beispiele wurde Schellack (Klassifizierung E904, Schmelztemperatur 65-85 °C, Säurezahl 65-80, Verseifungszahl 180-240, Wachsgehalt maximal 0,2 Gew.-%, Trocknungsverlust maximal 2,0 Gew.-%, Handelsprodukt der Firma Wolff & Olsen, Hamburg) als 50 Gew.-%ige, ethanolische Lösung (Ethanol > 99 Gew.-%) (= Lösung L), das Polyamid Elvamide® 8063 als etwa 15 Gew.-%ige, wässrig-ethanolische Lösung (Ethanol:Wasser etwa 75:25 Gew.-Teile) (= Lösung E) verwendet.

Zur Herstellung der wässrig-ethanolischen, den Schellack und das Polyamid umfassenden Lösung wurden die Lösungen L und E in verschiedenen Gewichtsverhältnissen miteinander vermischt und gegebenenfalls leicht erwärmt, bis die Lösung trübungs-frei war.

Als zu beschichtende Wurstware wurden frische Salamis (Rohwurst mit Kunstdarm) gleichen Herstellungsdatums und vergleichbarem Gewicht eines Herstellers eingesetzt.

Die außen trockenen Würste wurden in den jeweils alkoholischen Lösungen getaucht und verblieben bis zur Trocknung nach etwa 2 Stunden hängend im Labor bei normaler Raumtemperatur. Zwei Würste blieben zum Vergleich unbehandelt (Vergleich 1 und 2).

Anschließend wurden die Würste in Cellophanhüllen verpackt und in Kartons gelagert.

Nach 4, 16 und 20 Tagen wurden Wiegeproben der Würste vorgenommen.

### Beurteilung der Würste

Die Würste wurden angeschnitten und wurden auf Farbe, auf Geruch und Geschmack beurteilt.

Es wurde kein Abblättern der erfindungsgemäßen filmartigen Überzüge an der Schnittstelle festgestellt. Die Filme haften sehr gut und waren von der Oberfläche des Kunstdarmes nicht ohne weiteres zu trennen. Die Beschichtung der Würste auf dem Kunstdarm war in allen Fällen gleichmäßig und geschlossen sowie transparent.

### Prüfbeurteilung (nach 20 Tagen Lagerung)

Die Gruppe der erfindungsgemäß beschichteten Würste erhielt die beste Beurteilung.

Alle mit der erfindungsgemäßen Zusammensetzung beschichteten Würste hatten ein ungewöhnlich positives Farbbild nach dem Anschnitt und zeigten nicht den geringsten Ansatz einer Randbildung. Dies ist auf den geringen Fleischsaftverlust zurückzuführen.

Der Geschmack und Geruch der erfindungsgemäß beschichteten Würste wurde im Vergleich zu den unbeschichteten Würsten (Vergleich 1 und 2) mit der bestmöglichen Beurteilung eingestuft.

Die unbeschichteten Würste (Vergleich 1 und 2) bekamen eine negative Beurteilung.

Das Farbbild war mangelhaft, mit einer relativ starken, etwa 2 cm zum Wurstrand zeigenden Randbildung.

Der Geschmack wurde als nicht zufriedenstellend und eher zu salzig bezeichnet, was auf den hohen Fleischsaftverlust zurückzuführen ist.

Die nachfolgende Tabelle gibt die gefundenen Ergebnisse wieder:

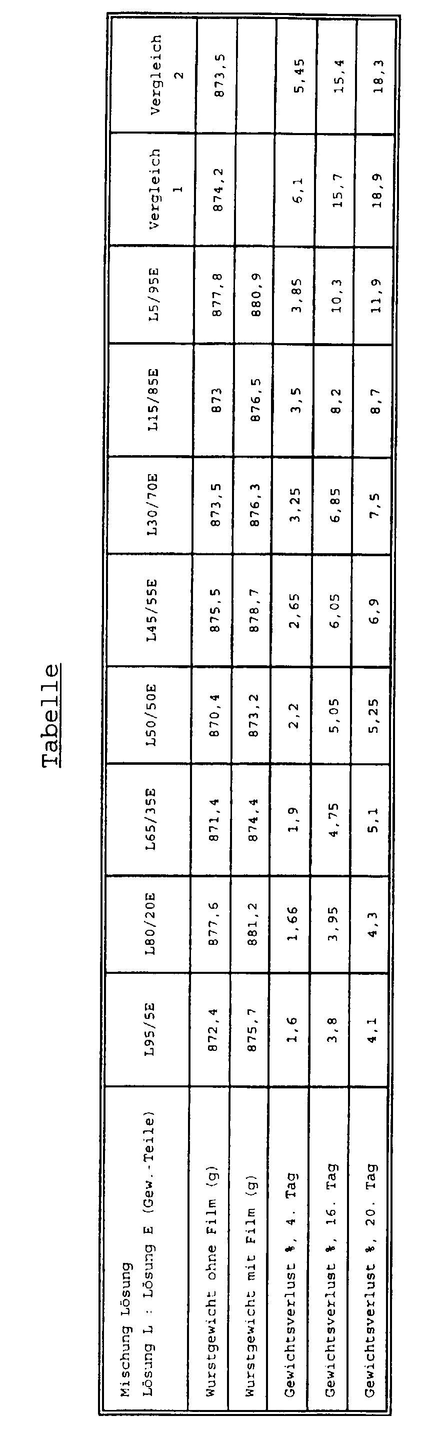

## Patentansprüche

1. Verfahren zum Beschichten von Lebensmitteln, die ausgewählt sind aus Dauerwürsten, die eine Natur- oder Kunstdarmumhüllung aufweisen und Hartkäsen mit einem dauerhaften, gleichmäßigen Überzug aus einer Zusammensetzung umfassend
(a) 1-99 Gew.-% Schellack und
(b) 99-1 Gew.-% Polyamid
durch Behandlung der Oberfläche der Würste oder der Käse mit einer Zusammensetzung umfassend in wässrig-ethanolischer Lösung
(a) 1-99 Gew.-% Schellack und
(b) 99-1 Gew.-% wenigstens eines in wässrigem Ethanol löslichen Polyamids,
jeweils bezogen auf die Gesamtmenge von (a) und (b).

2. Verfahren nach Anspruch 1, dadurch gekennzeichnet, daß die wässrig-ethanolische Lösung die Komponenten (a) und (b) in einer Konzentration von 1 bis 60 Gew.-% aufweist.

3. Verfahren nach Anspruch 1, dadurch gekennzeichnet, daß das wässrig-ethanolische Lösungsmittel wenigstens 50 Gew.-% Ethanol enthält.

4. Verfahren nach einem oder mehreren der Ansprüche 1 bis 3, dadurch gekennzeichnet, daß die Zusammensetzung umfasst
(a) 10-99 Gew.-% Schellack und
(b) 90-1 Gew.-% des in wässrigem Ethanol löslichen Polyamids,
jeweils bezogen auf die Gesamtmenge der Komponenten (a) und (b).

5. Verfahren nach einem oder mehreren der Ansprüche 1 bis 4, dadurch gekennzeichnet, daß die Zusammensetzung zusätzlich Farbstoffe und/oder Pigmente enthält.

6. Verfahren nach einem oder mehreren der Ansprüche 1 bis 5, dadurch gekennzeichnet, daß die behandelten Würste oder Käse anschließend im Luftstrom bei 10 °C bis 50 °C getrocknet werden.

7. Verfahren nach einem oder mehreren der Ansprüche 1 bis 6, dadurch gekennzeichnet, daß das Beschichten durch Tauchen, Besprühen oder Bestreichen mit der wässrig-ethanolischen Lösung erfolgt.

8. Verfahren nach einem oder mehreren der Ansprüche 1 bis 7, dadurch gekennzeichnet, daß die Dauerwürste oder die Hartkäse nach Trocknung die Zusammensetzung, umfassend den Schellack und das Polyamid, in einer Schichtdicke von bis zu 1 mm aufweisen.

9. Lebensmittel, ausgewählt aus Dauerwürsten, die eine Natur- oder Kunstdarmumhüllung aufweisen und Hartkäsen, erhältlich nach dem Verfahren, wie in einem oder mehreren der Ansprüche 1 bis 8 definiert.

10. Verwendung einer Zusammensetzung umfassend in wässrig-ethanolischer Lösung
(a) 1-99 Gew.-% Schellack und
(b) 99-1 Gew.-% wenigstens eines in wässrigem Ethanol löslichen Polyamids,
jeweils bezogen auf die Gesamtmenge von (a) und (b), zum Beschichten von Lebensmitteln, die ausgewählt sind aus Dauerwürsten, die eine Natur- oder Kunstdarmumhüllung aufweisen und Hartkäsen.

## Claims

1. A method for coating foods selected from long-keeping sausages having a natural or artificial sausage casing, and hard cheese, with a durable and uniform coating of a composition comprising
(a) from 1 to 99% by weight of shellac; and
(b) from 99 to 1% by weight of polyamide;
by treating the surface of the sausages or cheese with a composition comprising, in water/ethanol solution:
(a) from 1 to 99% by weight of shellac; and
(b) from 99 to 1% by weight of at least one polyamide which is soluble in aqueous ethanol;
respectively based on the total amount of (a) and (b).

2. The method according to claim 1, characterized in that said water/ethanol solution contains components (a) and (b) in concentrations of from 1 to 60% by weight.

3. The method according to claim 1, characterized in that said water/ethanol solvent contains at least 50% by weight of ethanol.

4. The method according to one or more of claims 1 to 3, characterized in that said composition comprises:
(a) from 10 to 99% by weight of shellac; and
(b) from 90 to 1% by weight of the polyamide which is soluble in aqueous ethanol;
respectively based on the total amount of components (a) and (b).

5. The method according to one or more of claims 1 to 4, characterized in that said composition additionally contains dyes and/or pigments.

6. The method according to one or more of claims 1 to 5, characterized in that the treated sausages or cheese are subsequently dried in an air current at 10°C to 50°C.

7. The method according to one or more of claims 1 to 6, characterized in that said coating is effected by dipping, spraying or brushing with said water/ethanol solution.

8. The method according to one or more of claims 1 to 7, characterized in that said long-keeping sausages or hard cheese, after drying, bear said composition comprising the shellac and polyamide in a layer thickness of up to 1 mm.

9. Foods selected from long-keeping sausages having a natural or artificial sausage casing, and hard cheese, obtainable by the method as defined in one or more of claims 1 to 8.

10. Use of a composition comprising, in water/ethanol solution:
(a) from 1 to 99% by weight of shellac; and
(b) from 99 to 1% by weight of at least one polyamide which is soluble in aqueous ethanol;
respectively based on the total amount of (a) and (b), for the coating of foods selected from long-keeping sausages having a natural or artificial sausage casing, and hard cheese.

## Revendications

1. Procédé pour recouvrir des denrées alimentaires qui sont sélectionnées parmi des saucisses longue conservation qui présentent une enveloppe en boyau naturel ou synthétique et des fromages à pâte dure, avec une couche régulière durable issue d'une composition comprenant
(a) 1 à 99 % en poids de gomme-laque et
(b) 99 à 1 % en poids de polyamide
par traitement de la surface des saucisses ou des fromages avec une composition contenant, dans une solution éthanolique aqueuse,
(a) 1 à 99 % en poids de gomme-laque et
(b) 99 à 1% en poids d'au moins un polyamide soluble dans l'éthanol aqueux,
sur la base respective de la quantité totale de (a) et (b).

2. Procédé selon la revendication 1, caractérisé en ce que la solution éthanolique aqueuse présente les composantes (a) et (b) dans une concentration comprise entre 1 et 60 % en poids.

3. Procédé selon la revendication 1, caractérisé en ce que le solvant éthanolique aqueux contient au moins 50 % en poids d'éthanol.

4. Procédé selon une ou plusieurs des revendications 1 à 3, caractérisé en ce que la composition comprend
(a) 10 à 99 % en poids de gomme-laque et
(b) 90 à 1% en poids du polyamide soluble dans l'éthanol aqueux,
sur la base respective de la quantité totale des composantes (a) et (b).

5. Procédé selon une ou plusieurs des revendications 1 à 4, caractérisé en ce que la composition contient en outre des colorants et/ou des pigments.

6. Procédé selon une ou plusieurs des revendications 1 à 5, caractérisé en ce que les saucisses ou les fromages traités sont ensuite séchés dans un courant d'air de 10 °C à 50 °C.

7. Procédé selon une ou plusieurs des revendications 1 à 6, caractérisé en ce que le recouvrement est réalisé par immersion, pulvérisation ou enduction avec la solution éthanolique aqueuse.

8. Procédé selon une ou plusieurs des revendications 1 à 7, caractérisé en ce que la saucisse longue conservation ou le fromage à pâte dure présente, après séchage, la composition, comprenant la gomme-laque et le polyamide, sur une épaisseur de couche allant jusqu'à 1 mm.

9. Denrée alimentaire, sélectionnée parmi les saucisses longue conservation qui possèdent une enveloppe en boyau naturel ou synthétique et les fromages à pâte dure, pouvant être obtenue selon le procédé tel que défini dans une ou plusieurs des revendications 1 à 8.

10. Utilisation d'une composition comprenant, dans une solution éthanolique aqueuse
(a) 1 à 99 % en poids de gomme-laque et
(b) 99 à 1% en poids d'au moins un polyamide soluble dans l'éthanol aqueux,
sur la base respective de la quantité totale de (a) et (b), pour recouvrir des denrées alimentaires sélectionnées parmi des saucisses longue conservation qui possèdent une enveloppe en boyau naturel ou synthétique et des fromages à pâte dure.
